# EUROPÄISCHE PATENTANMELDUNG

(11) **EP 2 913 137 A1**
(43) Veröffentlichungstag der Anmeldung: **02.09.2015**
(21) Anmeldenummer: 14156846.9
(22) Anmeldetag: 26.02.2014
(51) Int. Cl.: B23K 26/06, B23K 26/067, B23K 26/38

(54) **Laserbearbeitungsvorrichtung und Verfahren**

(71) Anmelder: Bystronic Laser AG, 3362 Niederönz (CH)
(72) Erfinder: Rataj, Thomas, 3363 Oberoenz (CH); Wittwer, Stefan, 3360 Herzogenbuchsee (CH)
(74) Vertreter: Patentbüro Paul Rosenich AG

(57) **Zusammenfassung**

Die Erfindung bezieht sich auf eine Laserbearbeitungsvorrichtung (1) zur Bearbeitung von Werkstücken (2), insbesondere einen Laserbearbeitungskopf (3), umfassend einen Strahlengang (13) und ein im Strahlengang (13) angeordnetes polarisierendes Strahlversatzelement (7) zur Erzeugung zweier linear polarisierter Teilstrahlen (11, 12), deren Polarisationsrichtungen zueinander, vorzugsweise um 90°, geneigt sind, aus einem Laserstrahl (10).

Um die Trennungsdistanz der beiden Teilstrahlen für eine optimierte Werkstückbearbeitung zu vergrössern, ist das polarisierende Strahlversatzelement (7) in einem divergenten oder konvergenten Strahlengang-Abschnitt (15) des Strahlenganges (13) angeordnet.

Die Erfindung bezieht sich auch auf ein Verfahren zum Bearbeiten von Werkstücken (2) mit einer Laserbearbeitungsvorrichtung (1).

## Beschreibung

Die Erfindung betrifft eine Laserbearbeitungsvorrichtung nach dem Oberbegriff des Anspruchs 1 und ein Verfahren zum Bearbeiten von Werkstücken mit einer Laserbearbeitungsvorrichtung nach dem Oberbegriff des Anspruchs 9.

Die DE102011116833A1 offenbart als nächstliegender Stand der Technik die Merkmale des Oberbegriffs des Anspruch 1.

Die JP2001138083A offenbart eine Laserbearbeitungsvorrichtung zur Erzeugung einer Vielzahl von konvergierenden Spots derselben Grösse auf einem Werkstück, wodurch viele Stellen des Werkstückes gleichzeitig bearbeitet werden können. Die Aufspaltung eines Laserstrahls erfolgt dabei mittels eines Phasengitters oder strukturierten Linsen.

Die WO2012080883A1 offenbart eine Laserbearbeitungsmaschine, die jedoch kein polarisierendes Strahlversatzelement aufweist und damit von der Erfindung weit entfernt liegt.

Der aus dem nächstliegenden Stand der Technik resultierende Nachteil besteht insbesondere darin, dass nur eine geringe Distanz zwischen den beiden fokussierten Teilstrahlen erreicht werden kann, wodurch die polarisierte Wirkungszone im Strahlquerschnitt gering bleibt. Dies hat nachteilige Auswirkungen auf die Qualität des Bearbeitungsvorganges.

Aufgabe der vorliegenden Erfindung ist es somit, eine Laserbearbeitungsvorrichtung bereitzustellen, die diese Nachteile nicht aufweist und mit der eine ausreichende Trennungsdistanz zwischen den beiden Teilstrahlen in oder nahe der beiden Fokusebenen erreicht werden kann. Dies soll mit einfachen und vor allem platzsparenden Mitteln bewerkstelligt werden können. In Folge sollen sich die Bearbeitungsqualität und die Bearbeitungsgeschwindigkeit erhöhen.

Diese Aufgabe wird mit einer Laserbearbeitungsvorrichtung der eingangs genannten Art dadurch gelöst, dass das polarisierende Strahlversatzelement in einem divergenten oder konvergenten Strahlengang-Abschnitt des Strahlenganges angeordnet ist.

Unter einem divergenten oder konvergenten Strahlengang-Abschnitt wird ein Abschnitt des Strahlenganges verstanden, in dem der Laserstrahl bzw. daraus erzeugte Teilstrahlen aufgrund der durch die Laserbearbeitungsvorrichtung vorgegebenen Optik divergiert oder konvergiert. Es handelt sich damit um einen Strahlengang-Abschnitt, entlang dessen sich ein nicht-kollimierter Laserstrahl ausbreitet.

Vorzugsweise beträgt bei einer Anordnung des Strahlversatzelementes in einem konvergenten Strahlengang-Abschnitt der Konvergenzwinkel (definiert als Halbwinkel, d.h. in Bezug zur optischen Achse) des/der im konvergenten Strahlengang-Abschnitt verlaufenden Strahles bzw. Teilstrahlen zumindest 0,5°. Besonders bevorzugt beträgt dieser Konvergenzwinkel höchstens 6°.

Vorzugsweise beträgt bei einer Anordnung des Strahlversatzelementes in einem divergenten Strahlengang-Abschnitt der Divergenzwinkel (definiert als Halbwinkel, d.h. in Bezug zur optischen Achse) des/der im divergenten Strahlengang-Abschnitt verlaufenden Strahles bzw. Teilstrahlen zumindest 0,5°. Besonders bevorzugt beträgt dieser Divergenzwinkel höchstens 6°, bevorzugt zumindest 3°.

Das polarisierende Strahlversatzelement ist ein polarisierendes Strahlteilelement, mit dem aus einem eingehenden Strahl zumindest zwei, unterschiedlich polarisierte Teilstrahlen erzeugt werden. Zumindest einer der erzeugten Teilstrahlen (bzw. dessen optische Achse) ist zum eingehenden Strahl (bzw. dessen optischen Achse) lateral versetzt. Bei diesem Versatz handelt es sich vorzugsweise um einen im Wesentlichen parallelen Versatz; und sind vorzugsweise auch die optischen Achsen der Teilstrahlen im Wesentlichen parallel zueinander.

Die im Nachfolgenden ausführlich beschriebenen Wirkungen und Vorteile der Erfindung sind zusammengefasst wie folgt:
- Trennungsdistanz der Teilstrahlen wird erheblich erhöht und kann Werte in der Grössenordnung der Fokusradien und grösser annehmen;
- Dazu ist bereits ein sehr dünnes (z.B. ≤ 1 mm) polarisierendes Strahlversatzelement ausreichend, wodurch sich eine platzsparende Konstruktion ergibt;
- Womit wiederum Leistungsverluste und Strahlaberrationen klein gehalten werden;
- Hohe Genauigkeit bei der Einstellung der Trennungsdistanz;
- Höherer Absorptionsgrad für steile Schnittfronten;
- Hohe Bearbeitungsqualität, insbesondere erhöhte Grat- und Riefenqualität im Schmelzschnitt;
- Grössere effektive Fokusdurchmesser, die Vorteile beim Bearbeiten von dicken Werkstücken bieten.

Obiges gilt gleichermassen für Strahlversatzelemente, die in einem divergenten Strahlengang-Anschnitt angeordnet sind.

Die Vorteile werden im Folgenden insbesondere im Zusammenhang mit dem NIR(nahes IR)-Schneiden beschrieben. Die nachfolgenden Überlegungen betreffen bevorzugte Anwendungsgebiete und Ausführungsformen und sind daher in keiner Weise als einschränkend zu verstehen.

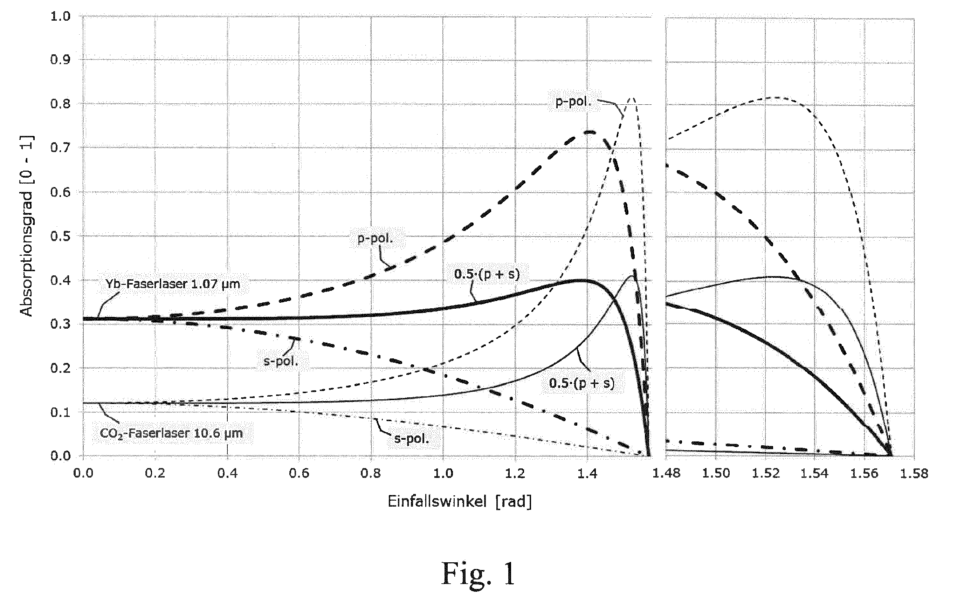

Beim Schmelzschneiden von Metallen ist der Energieeintrag in den Werkstoff im Wesentlichen abhängig von den zwei Hauptfaktoren: Laserleistung pro Fläche (Intensität in W/m²) und Absorptionsgrad (Wertebereich von 0 bis 1). Die Laserleistung pro Fläche hängt vom erzeugenden Lasersystem und der Bearbeitungsoptik ab. Der Absorptionsgrad hängt zum einen vom Einfallswinkel (horizontale Achse in Fig. 1) der Laserstrahlung und zum andern vom Brechungsindex des Werkstoffs ab. Der Brechungsindex des Werkstoffs ist die makroskopische Wechselwirkungsfunktion und hängt zum einen von der Wellenlänge der Laserstrahlung und zum andern von den elektrischen Eigenschaften des Werkstoffes sowie von dessen Phasenzustand ab.

Aus der Wellenlängenabhängigkeit des Brechungsindex folgt, dass der Absorptionsgrad für das Schneiden mit einem CO₂-Laser (Wellenlänge 10.6 µm) und das Schneiden mit einem Faserlaser (Wellenlänge 1.07 µm) unterschiedlich verläuft. Daraus ergeben sich Qualitätsunterschiede im Laserschnitt. In Fig. 1 sind zwei Kurvengruppen mit je drei Funktionsverläufen des Absorptionsgrades von Eisenschmelze bei 1535 °C längs der Achse des Einfallswinkels von 0 [rad] bis 0.5 pi [rad] (entspricht 0° bis 90°; pi steht hier für die Kreiszahl π) aufgetragen, wobei der senkrechte Einfall bei Einfallswinkel 0 [rad] und der streifende Einfall bei Einfallswinkel 0.5 pi [rad] liegt. Die erste Kurvengruppe (deren Kurven an der y-Achse weiter unten beginnen und dünn gedruckt sind) zeigt den Funktionsverlauf des Absorptionsgrades für die Wellenlänge 10.6 µm des CO₂-Lasers. Die zweite Kurvengruppe (deren Kurven an der y-Achse weiter oben beginnen und fett gedruckt sind) zeigt den Verlauf des Absorptionsgrades für die Wellenlänge 1.07 µm, wie sie beispielsweise ein Yb-Faserlaser aufweist. Die monoton fallenden, strich-gepunkteten Kurven, die kein Maximum aufweisen, beschreiben den Verlauf des Absorptionsgrades von s-polarisierter Laserstrahlung der Wellenlänge 10.6 µm bzw. der Wellenlänge 1.07 µm. Die gestrichelten Kurven mit den höchsten Wertemaxima beschreiben jeweils den Verlauf des Absorptionsgrades von p-polarisierter Laserstrahlung der Wellenlänge 10.6 µm bzw. der Wellenlänge 1.07 µm.

Die s-Polarisation bedeutet, dass der elektrische Feldvektor der Laserstrahlungswelle am Ort des Einfalls auf die Werkstückoberfläche senkrecht zur Einfallsebene schwingt. Die p-Polarisation bedeutet, dass der elektrische Feldvektor der Laserstrahlungswelle am Ort des Einfalls auf die Werkstückoberfläche parallel zur Einfallsebene schwingt. Die Einfallsebene wird durch die Strahlausbreitungsrichtung des einfallenden Laserstrahls und durch den Normalvektor der Werkstoffoberfläche am Punkt des Strahlungseinfalls aufgespannt.

Die jeweils dazwischen liegenden, ausgezogen gezeichneten Kurven (mit einem weniger stark ausgeprägten Wertemaximum) beschreiben den Mittelwert des Absorptionsgrades von Laserstrahlung, die zu gleichen Anteilen s- und p-polarisiert ist. Beispielsweise wird dies erfüllt durch die in der kW-Klasse gebräuchliche zirkular polarisierte CO₂-Laserstrahlung oder durch die unpolarisierte Laserstrahlung eines Yb-Faserlasers.

Die Kurvendiskussion des Absorptionsgrades anhand von Fig. 1 ergibt folgende Erkenntnisse:
1.) Der Funktionsverlauf des Absorptionsgrades ist nicht nur wellenlängenabhängig, sondern bei Einfallswinkeln grösser als 0 [rad] und kleiner als 0.5 pi [rad] auch abhängig davon, ob am Ort des Strahlungseinfalls s- oder p-Polarisation vorliegt. Beim Einfallswinkel 0 [rad] (senkrechter Einfall) fällt die Unterscheidung von s- und p-Polarisation weg, und der Absorptionsgrad hängt nicht von der Polarisationsform des Laserstrahls ab. Beim Einfallswinkel 0.5 pi [rad] wird keine Strahlungsenergie in den Werkstoff eingetragen, womit die Unterscheidung von s- und p-Polarisation für die praktische Anwendung irrelevant wird.
2.) Der zahlenmässige Vergleich im Einfallswinkelintervall oberhalb des Einfallswinkels von 1.48 [rad] (≈ 84.8 °) bis 0.5 pi [rad] (Fig. 1, rechter Teil) zeigt, dass von der unteren Kurvengruppe der CO₂-Wellenlänge 10.6 µm die Mittelwertskurve (mit weniger stark ausgeprägtem Peak) und die p-polarisierte Kurve (mit stark ausgeprägtem Peak) durchwegs höheren Absorptionsgrad aufweisen als die entsprechenden Absorptionsgradverläufe des Faserlasers mit Wellenlänge 1.07 µm.
3.) Der Unterschied im genannten Einfallswinkelintervall zeigt, dass die Maxima der Absorptionsgradkurven für die CO₂-Wellenlänge 10.6 µm bei einem grösseren Einfallswinkel (Brewsterwinkel) liegen als bei der Faserlaser-Wellenlänge 1.07 µm. Daraus folgt, dass die entsprechenden Verläufe des Absorptionsgrads für Einfallswinkel gegen 0.5 pi [rad] bei Faserlaser-Wellenlängen langsamer gegen 0 streben als bei CO₂-Wellenlänge. Das bedeutet, dass mit CO₂-Wellenlängen der Energieeintrag ins Material bei Einfallswinkeln im genannten Intervall von 1.48 [rad] bis 0.5 pi [rad] effizienter bleibt als bei der Faserlaser-Wellenlänge.
4.) Der Verlauf des Absorptionsgrades für p-polarisierten Faserlaserstrahl bei Wellenlänge 1.07 µm (obere Kurvengruppe der Faserlaserwellenlänge 1.07 µm, darin die oberste Kurve) liegt für den genannten Einfallswinkelbereich von 1.48 [rad] bis 0.5 pi [rad], insbesondere aber für den Einfallswinkelbereich von 1.52 [rad] bis 0.5 pi [rad] nahe am Verlauf des Mittelwerts des Absorptionsgrades für zirkularpolarisierten CO₂-Laserstrahl bei Wellenlänge 10.6 µm (untere Gruppe, mittlere Kurve).

Aus diesen Punkten, insbesondere aber aus Punkt 4, leitet sich die Absicht ab, den Absorptionsgrad des Laserschmelzschneidens
a) im Einfallswinkelbereich 1.48 [rad] (≈ 84.8 °) bis 0.5 pi [rad] und
b) für den NIR-Wellenlängenbereich (nahes Infrarot) von 0.7 bis 3 µm
durch Formung der Polarisation des Laserstrahlwerkzeugs so zu verändern, dass der Absorptionsgrad im genannten Einfallswinkelbereich gleich oder ähnlich verläuft wie der Absorptionsgrad der CO₂-Wellenlänge 10.6 µm. Der eigentliche Zweck dieser oben formulierten Absicht ist es, den Energieeintrag von Laserstrahlung des NIR-Wellenlängenbereichs für steilen Strahlungseinfall an denjenigen der CO₂-Laserstrahlung anzugleichen und damit effizienter zu gestalten.

Es stellt sich folglich die Aufgabe, die Polarisation des Strahlwerkzeugs mit NIR-Wellenlänge so zu formen, dass sich möglichst überall auf der Wechselwirkungsfläche zwischen Laserstrahlung und Werkstück eine p-polarisierte Absorption einstellt. Deren Absorptionsgrad entspricht der oberen Kurve der oberen Kurvengruppe des Faserlasers in Fig. 1.

Eine bekannte Lösung zu dieser Aufgabe ist die radiale Polarisation, für die CO₂-Lasertechnologie beschrieben in den Publikationen von A. V. Nesterov und V. G. Niziev [z.B in J.Phys.D: Appl. Phys. 33 (2000) p. 1817-1822]. Diese Polarisationsform zeichnet sich dadurch aus, dass die Energie des elektrischen Feldes im Strahlquerschnitt ringförmig verteilt ist und die Schwingungen des Feldvektors radial, d.h. senkrecht zur Ringform der Energieverteilung gerichtet sind. Da die Wechselwirkungsfläche an der Schnittfront näherungsweise als (halb-) zylinderförmige Fläche angesehen werden kann, realisiert die radiale Polarisation dort überall eine fast perfekt p-polarisierte Absorption. Die zur radialen Polarisation orthogonale Polarisationsform ist die tangentiale (oder azimutale) Polarisation, bei welcher der Feldvektor tangential, d.h. parallel entlang der Ringform der Energieverteilung schwingt. Radiale und tangentiale Polarisation sind Spezialfälle der axialsymmetrischen Polarisation.

Die CO₂-Technologie der kW-Klasse bietet Spielraum für die Polarisationsformung im Resonator. Durch Einfügen von diffraktiven optischen Elementen (DOEs), durch Faltspiegel oder axikonischen Spiegeln mit polarisationsselektiven Beschichtungen in die Resonatoroptik kann die gewünschte Polarisationsform durch das laseraktive Medium verstärkt und alle unerwünschten Polarisationsformen unterdrückt werden: Z.B. beschreibt M.A. Ahmed et. al., Opt. Lett. 32(13), 2007 sowie WO 2009/010043 A2 eine Umsetzung mittels DOEs im Resonator.

Auch Faserlaseroszillatoren können mit dem gleichen Ansatz polarisiert werden. Dazu wurden modenselektierende aktive Fasern in den Resonator eingesetzt (z.B. Chun-Can Wang, Opt.Comm. 284 (2011), p. 1015-1018), die lediglich diejenigen Wellenleitermoden verstärken, die nur radial polarisiert existieren. Ein anderer Ansatz besteht darin, ein polarisierendes Element in den Resonator mit Faserstrecke einzufügen (M. Fridman, arXiv:0811.4362v1[physics.optics] 26.Nov.2008). Beide Ansätze sind jedoch nur im Leistungsbereich von einigen W gezeigt worden.

Die höchsten polarisationsgeformten Laserstrahlleistungen im NIR-Wellenlängenbereich wurden bisher für den Resonator des Scheibenlasers berichtet (M. A. Ahmed, LaserMag 4/11, p.26-27), wo eine lineare Polarisation mittels eines Polarisationskonverterelements in radiale oder tangentiale Polarisation gewandelt wird.

Im Zusammenhang mit einer bevorzugten Ausführungsform der Erfindung besteht eine Aufgabe bei der Polarisationsformung im Faser- oder Scheibenlaser der kW-Klasse darin, die Polarisationsform über den anschliessenden Strahlweg zum Bearbeitungsort möglichst verlustfrei zu erhalten. Passive Polarisationsformungsstrategien umgehen diese Hürde, indem die Polarisation des Laserstrahls erst unmittelbar vor dem Bearbeitungsort geformt wird. Idealerweise geschieht dies mit einem optischen Element im Bearbeitungskopf der Laserbearbeitungsanlage. Als optisches Polarisationsformungselement kommt der bereits genannte Polarisationskonverter in Betracht, der als passives Element zwischen die strahltransportierende Prozessfaser und dem Bearbeitungsort eingesetzt wird. Voraussetzung für die Erzeugung einer axialsymmetrischen Polarisationsform ist allerdings, dass der zu konvertierende Strahl bereits (typischerweise linear) polarisiert sein muss, d.h. man setzt voraus, dass das oben erwähnte Problem der verlustlosen Polarisationserhaltung über den Strahltransport (typischerweise ein Lichtleitkabel mit Prozessfaser) gelöst ist. Erzeugt man hingegen die geforderte Linearpolarisation ebenfalls passiv (z.B. mit einem linear polarisierenden Strahlteiler wie Glan-Taylor- oder Glan-Thompson-Prismen) vor dem Konverterelement, so resultiert in einfacher technischer Lösung ein Leistungsverlust von 50 %.

Ein Ansatz der Erfindung besteht nun darin, für eine passive Polarisationsformung den Einsatz eines polarisierendes Strahlversatzelements, vorzugsweise eines DOE oder eines doppelbrechenden Materials, vor, welches aus dem typischerweise unpolarisiert eingehenden Laserstrahls zwei gegeneinander versetzte Teilstrahlen erzeugt, die jeweils für sich linear polarisiert sind. Typischerweise stehen die Linearpolarisationen dieser beiden Teilstrahlen senkrecht zu einander. Hierzu gebräuchliche und für den kW-Leistungsbereich geeignete doppelbrechende Materialien sind u.a. alpha-BBO oder YVO₄. Diese und andere Materialien können für die genannte Versetzung in zwei Teilstrahlen beispielsweise als zwei- oder mehrteilige Prismenwürfel (z.B. Wollaston-Prisma) oder als einteiliges Strahlversatzelement (beam displacer) ausgeführt sein. Durch geeignete Anordnung der optischen Achse des doppelbrechenden Materials kann die Auftrennung in einen ordentlichen Teilstrahl (o) und in einen ausserordentlichen Teilstrahl (ao) so beeinflusst werden, dass die beiden Teilstrahlen in einem bestimmten Gebiet versetzt erscheinen.

Zum Erreichen der Voraussetzungen:
a) Anwendbarkeit in kW-Laserstrahlung
b) einfache Integration in einen Bearbeitungskopf
c) geringe Verluste bei zuverlässiger Polarisationsformung und
d) das Minimieren der notwendigen transmissiven optischen Elemente im Bearbeitungskopf
zeichnet sich das genannte einteilige Strahlversatzelement für die Praxis besonders aus, insbesondere wenn es in den optischen Materialien alpha-BBO oder YVO4 ausgeführt ist.

Die der Erfindung zugrundeliegende Idee unterscheidet sich nun massgeblich vom Stand der Technik, in dem das polarisierende Strahlversatzelement in einen divergenten oder konvergenten Strahlengang-Abschnitt angeordnet wird. Die dem Stand der Technik entsprechenden Bearbeitungsoptiken für die NIR-Wellenlängen bestehen typischerweise aus einer Kollimationseinheit, die den aus der Prozessfaser austretenden divergenten Laserstrahl kollimiert, und einer anschliessenden Bearbeitungslinse, die den kollimierten Laserstrahl auf den Bearbeitungsort fokussiert. Dabei wird das Strahlversatzelement in den kollimierten Strahl eingesetzt (wie bereits eingangs erwähnt: DE 10 2011 116 833 A1). Strahlmessungen an einem derart realisiert Aufbau haben ergeben, dass die beiden Teilstrahlen am Bearbeitungsort (d.h. in der Regel in der Fokusebene) nur um wenige Prozent des jeweiligen Fokusradius auseinanderliegen, obschon die Strahlversatzelemente mehrere Millimeter lang waren. Durch die geringe Distanz zwischen den beiden fokussierten Teilstrahlen war die polarisierte Wirkungszone im Strahlquerschnitt gering, dementsprechend gering war der Einfluss auf die Bearbeitungsqualität.

Die Erfindung zeigt nun, dass die Trennungsdistanz der beiden fokussierten Teilstrahlen im Nahfeld sofort in die Grössenordnung der Fokusradien oder grösser wächst, wenn das polarisierende Strahlversatzelement (bzw. Strahlteilelement) statt in einen kollimierten in einen divergenten oder konvergenten Strahl eingefügt wird.

Vorzugsweise beträgt die Dicke des Strahlversatzelements (in Strahlrichtung gesehen) höchstens 10mm, bevorzugt zwischen 0,2mm und 5mm, besonders bevorzugt zwischen 0,5mm und 2mm.

In einer bevorzugten Ausführungsform ist für jedes Strahlversatzelement eine spezielle AR(Antireflex-)Beschichtung vorgesehen, die speziell für den ordentlichen und ausserordentlichen Brechungsindex ausgelegt wird.

Es zeigte sich, dass bereits sehr dünne Strahlversatzelemente von 1 mm oder weniger eine genügende Trennungsdistanz der Fokusse der Teilstrahlen bewirken können, wodurch Leistungsverluste und Strahlaberrationen verringert werden können. Es wurde erkannt, dass in diesem Fall die Trennungsdistanz durch die Dicke und/oder den Winkel der optische Achse des Strahlversatzelements mit einer Genauigkeit von < 10 µm eingestellt werden kann.

Eine bevorzugte Ausführungsform zeichnet sich somit dadurch aus, dass die Laserbearbeitungsvorrichtung eine NIR(nahes Infrarot)-Laserquelle umfasst (d.h. Wellenlängen zwischen 0.7 bis 3 µm emittiert). Im Vergleich zum CO₂-Laserschneiden ist die Absorption bei nicht-polarisiertem NIR-Laserschneiden in Allgemeinen geringer. Unter Ausnutzung der radialen Polarisation kann speziell im NIR-Laserschneiden der Absorptionsgrad verbessert werden, woraus ein Qualitätsvorteil (und auch Geschwindigkeitsvorteil) resultieren kann. Dadurch kann eine industrietaugliche Lösung umgesetzt werden.

Eine bevorzugte Ausführungsform zeichnet sich dadurch aus, dass das polarisierende Strahlversatzelement ein Element aus doppelbrechendem Material, insbesondere alpha-BBO (alpha-Bariumborat) oder YVO4 (Yttrium-Vanadat), oder ein diffraktives optisches Element (DOE) ist.

Vorzugsweise umfasst die Laserbearbeitungsvorrichtung eine Laseraustrittsöffnung, wobei der Strahlengang in Richtung Laseraustrittsöffnung verläuft. Die Strahlformung kann demnach in einem geschlossenen Gehäuse, z.B. innerhalb eines Laserbearbeitungskopfes, erfolgen.

Eine bevorzugte Ausführungsform zeichnet sich dadurch aus, dass die Laserbearbeitungsvorrichtung zumindest eine fokussierende Optik, vorzugsweise eine Sammellinse aufweist, die das Laserlicht (in Strahlrichtung) konvergieren lässt, wobei vorzugsweise der konvergente Strahlengang-Abschnitt ausgehend von einer fokussierenden Optik verläuft.

Bevorzugt erstreckt sich der konvergente Strahlengang-Abschnitt, in dem das Strahlversatzelement angeordnet ist, von der fokussierenden Optik durchgehend bis zu einer Laseraustrittsöffnung der Laserbearbeitungsvorrichtung. Durch diese Massnahme kann die Zahl der optischen Bauteile gering gehalten werden, sodass Strahlungsverluste minimiert werden.

Eine bevorzugte Ausführungsform zeichnet sich dadurch aus, dass die Laserbearbeitungsvorrichtung eine verstellbare Abbildungseinrichtung aufweist, die sowohl die Fokuslage als auch die optische Abbildungsvergrösserung an die Anforderungen anpassen kann.

Bevorzugt umfasst die Laserbearbeitungsvorrichtung einen Festkörper-Laser (z.B. Faserlaser), wobei deren optische Transportfaser in den Laserbearbeitungskopf mündet und divergente Strahlung aussendet, die entweder direkt oder indirekt (z.B. über kollimierende und/oder umlenkende Optiken, wie einen Spiegel) auf die fokussierende Optik auftrifft. Damit kann das Strahlversatzelement sowohl im konvergenten als auch im divergenten Strahlengang-Abschnitt eingebracht werden. Eine bevorzugte Ausführungsform zeichnet sich dadurch aus, dass die Laserbearbeitungsvorrichtung ein Gehäuse, in dem die Laseraustrittsöffnung ausgebildet ist, und ein im Strahlengang angeordnetes Schutzglas, das das Gehäuse nach aussen hin abschliesst, aufweist, wobei das polarisierende Strahlversatzelement im konvergenten Strahlengang-Abschnitt zwischen der fokussierenden Optik und dem Schutzglas oder im divergenten Strahlengang-Abschnitt zwischen Strahlaustritt aus der Transportfaser und der fokussierenden Optik angeordnet ist. Der definierte Strahlversatz ist hierbei mit nur einem Strahlversatzelement realisierbar, so dass zusätzliche optische Verluste gering gehalten werden.

Eine bevorzugte Ausführungsform zeichnet sich dadurch aus, dass die fokussierende Optik Teil einer verstellbaren Abbildungseinrichtung zum Einstellen des sich durch den konvergenten Strahlengang-Abschnitt ergebenden Fokus ist. Die Fokusquerschnitte der beiden Teilstrahlen können dadurch je nach Anforderung eingestellt werden.

Eine bevorzugte Ausführungsform zeichnet sich dadurch aus, dass im Falle der Positionierung eines polarisierenden Strahlversatzelements in den konvergenten Strahlengang-Abschnitt beide Teilstrahlen unabhängig von der Vergrösserung der Abbildungseinrichtung voneinander versetzt sind. Die Teilstrahlen sind dabei vorzugsweise um etwa 100 µm in der Fokusebene voneinander versetzt. Die Leistungsverteilungen im effektiven Fokusquerschnitt werden je nach Anforderung geformt, wobei sich für hohe Abbildungsvergrösserungen beide Teilstrahlen auch in der Fokusebene überlappen können.

Eine bevorzugte Ausführungsform zeichnet sich dadurch aus, dass der innerhalb des Gehäuses verlaufende konvergente Strahlengang-Abschnitt (in Strahlrichtung) nach einer fokussierenden Optik abgesehen von dem polarisierenden Strahlversatzelement und einem gegebenenfalls vorgesehenen Schutzglas frei von weiteren optischen Bauteilen ist. Das polarisierende Strahlversatzelement ist daher das letzte Strahlformungselement im Strahlengang, bevor die Teilstrahlen die Laserbearbeitungsvorrichtung in Richtung Werkstück verlassen.

Eine bevorzugte Ausführungsform zeichnet sich dadurch aus, dass das polarisierende Strahlversatzelement um eine Drehachse drehbar gelagert ist und mit einem Drehantrieb zusammenwirkt. Dadurch können je nach Anforderungen (zeitlich gemittelte) effektive Fokusquerschnitte erzeugt werden, mit denen die Bearbeitungsqualität und -geschwindigkeit erhöht werden kann.

Eine bevorzugte Ausführungsform zeichnet sich dadurch aus, dass die Drehachse im Wesentlichen parallel zur optischen Achse des Strahlenganges ist, vorzugsweise mit der optischen Achse des Strahlenganges zusammenfällt.

Eine bevorzugte Ausführungsform zeichnet sich dadurch aus, dass die Steuerung des Drehantriebes ausgebildet ist, um eine kontinuierliche Drehung und/oder intermittierende Vorwärts- und Rückwärts-Drehbewegung des polarisierenden Strahlversatzelements zu bewirken. Mit ersterer können kreissymmetrische, mit letzterer auch Kreisbogen bzw. nierenförmige Fokusquerschnitte in der Fokusebene erzielt werden.

Eine bevorzugte Ausführungsform zeichnet sich dadurch aus, dass das polarisierende Strahlversatzelement zur Ebene, die senkrecht zur optischen Achse des vor dem polarisierenden Strahlversatzelement verlaufenden Strahlengang-Abschnitts steht, geneigt ist, sodass der laterale Versatz der zwei linear polarisierten Teilstrahlen in Bezug zur optischen Achse im Wesentlichen gleich gross ist (symmetrischer Strahlversatz). Dies ermöglicht einen ringförmigen Fokusquerschnitt oder kreisbogenförmige Fokusquerschnitte der einzelnen Teilstrahlen.

Eine bevorzugte Ausführungsform zeichnet sich dadurch aus, dass einer der Teilstrahlen ein ordentlicher Teilstrahl und der andere der Teilstrahlen ein ausserordentlicher Teilstrahl ist und die Drehachse des polarisierenden Strahlversatzelements mit der optischen Achse des ordentlichen Teilstrahls zusammenfällt (asymmetrischer Strahlversatz). Bei einer Drehung bleibt der Fokusquerschnitt des ordentlichen Teilstrahls kreisförmig, während jener des ausserordentlichen Strahls kreisbogen- bzw. nierenförmig wird.

Eine bevorzugte Ausführungsform zeichnet sich dadurch aus, dass die fokussierende Optik Teil einer verstellbaren Fokussiereinrichtung zum Einstellen des sich durch den konvergenten Strahlengang-Abschnitt ergebenden Fokus ist. Die effektiven Fokusquerschnitte können dadurch je nach Anforderung verstellt werden. Die Aufgabe wird auch mit einem Verfahren zum Bearbeiten, insbesondere zum Schneiden, von Werkstücken mit einer Laserbearbeitungsvorrichtung, insbesondere nach einer der oben beschriebenen Ausführungsformen, bei dem ein Laserstrahl entlang eines Strahlenganges (gegebenenfalls in Richtung einer Laseraustrittsöffnung) in Richtung des Werkstückes geführt wird, wobei mittels eines im Strahlengang angeordneten polarisierenden Strahlversatzelements aus dem Laserstrahl zwei linear polarisierte Teilstrahlen, deren Polarisationsebenen zueinander, vorzugsweise um 90°, geneigt bzw. gerichtet sind, zueinander versetzt erzeugt (d.h. örtlich getrennt) werden. Dabei erfolgt der Versatz der zwei linear polarisierten Teilstrahlen in einem divergenten oder konvergenten Strahlengang-Abschnitt des Strahlenganges der Laserbearbeitungsvorrichtung.

Eine bevorzugte Ausführungsform zeichnet sich dadurch aus, dass das Bearbeiten des Werkstückes entlang einer Vorschubrichtung erfolgt und die Teilstrahlen in der Fokusebene in Bezug zur Vorschubrichtung vorzugsweise hintereinander bzw. versetzt zueinander angeordnet sind. Der Teilstrahl an der Schneidfront kann so andere Polarisation aufweisen als der nachlaufende Teilstrahl, der auf die entstehenden Schneidfugenränder wirkt.

In einer weiteren Ausführungsform sind die Fokusquerschnitte bzw. ist die (gedachte) Verbindungslinie zwischen ihren Mittelpunkten bzw. Zentren zur Vorschubrichtung verdreht bzw. geneigt. Dies ist insbesondere bei Spezialanwendungen, die eine asymmetrische Einwirkung auf die Schneidfuge erfordern, bevorzugt.

Eine bevorzugte Ausführungsform zeichnet sich dadurch aus, dass die Normalprojektion der Polarisationsrichtung oder der zeitlich gemittelten Polarisationsrichtung des - in Vorschubrichtung gesehen - vorderen Teilstrahles auf die Werkstückoberfläche im Wesentlichen parallel zur Vorschubrichtung steht. Damit steht die Polarisation senkrecht oder zumindest annähernd senkrecht zur Schneidfront (p-Polarisation), wodurch die Absorption an der Schneidfront erhöht wird.

Bei besonderen Erfordernissen der Anwendung kann die Polarisation des vorderen Teilstrahles auch in anderen (beliebigen) Winkeln zur Schneidfront (p-Polarisation) eingestellt werden.

Eine bevorzugte Ausführungsform zeichnet sich dadurch aus, dass die Normalprojektion der Polarisationsrichtung oder der zeitlich gemittelten Polarisationsrichtung des - in Vorschubrichtung gesehen - hinteren Teilstrahles auf die Werkstückoberfläche im Wesentlichen senkrecht zur Vorschubrichtung steht. Damit steht die Polarisation senkrecht oder zumindest annähernd oder teilweise senkrecht zu den Schnittfugenflächen, wodurch die Absorption an den Schnittfugenflächen erhöht wird.

Bei besonderen Erfordernissen der Anwendung kann die Polarisation des hinteren Teilstrahles auch in anderen (beliebigen) Winkeln zur Schneidfuge eingestellt werden.

Eine bevorzugte Ausführungsform zeichnet sich dadurch aus, dass das polarisierende Strahlversatzelement relativ zum Werkstück eine Drehbewegung um eine Drehachse ausführt, die im Wesentlichen parallel zur optischen Achse des Strahlenganges ist, vorzugsweise mit der optischen Achse des Strahlenganges zusammenfällt.

Eine bevorzugte Ausführungsform zeichnet sich dadurch aus, dass das polarisierende Strahlversatzelement relativ zum Werkstück in Abhängigkeit von der Änderung der Vorschubrichtung gedreht wird, so dass die Lage der beiden Teilstrahlen in der Fokusebene (bzw. an der Werkstückoberfläche) relativ zur jeweiligen Vorschubrichtung im Wesentlichen unverändert bleibt. Dies führt zu einem richtungsunabhängigen Schneidergebnis.

Eine bevorzugte Ausführungsform zeichnet sich dadurch aus, dass das polarisierende Strahlversatzelement um die Drehachse eine Oszillationsbewegung ausführt, wobei vorzugsweise der Drehwinkel der Oszillation innerhalb einer Periode höchstens 120°, vorzugsweise höchstens 90°, besonders bevorzugt 90°, beträgt, wobei vorzugsweise die Oszillationsbewegung im Wesentlichen symmetrisch zur Vorschubrichtung ist. Die Polarisation steht dabei an jeder Stelle im Wesentlichen senkrecht zur (halbzylinderförmigen) Schneidfront.

Bevorzugt beträgt der Drehwinkel in einer Auslenkung aus der Mittelstellung bzw. Ruhestellung (die vorzugsweise mit der Vorschubrichtung zusammenfällt) - 0° - höchstens ±60°, bevorzugt höchstens ±45°.

Bevorzugt beträgt die Oszillationsfrequenz bzw. (im Falle einer kontinuierlichen Drehung) Winkelgeschwindigkeit des polarisierenden Strahlversatzelementes bis zu 15kHz, vorzugsweise zwischen 0.01 kHz und 5 kHz.

Eine bevorzugte Ausführungsform zeichnet sich dadurch aus, dass das polarisierende Strahlversatzelement in einem divergenten Strahlengang-Abschnitt des Strahlenganges angeordnet ist. Dadurch werden beide Teilstrahlen abhängig von der Vergrösserung voneinander versetzt. Mittels der Abbildungseinrichtung werden sowohl die einzelnen Fokusquerschnitte der einzelnen Teilstrahlen als auch deren relativer Abstand vergrössert. Der effektive Fokusquerschnitt wird damit je nach Anforderung im weiten Bereich verstellt.

Eine bevorzugte Ausführungsform der Erfindung zeichnet sich dadurch aus, dass die Teilstrahlen in der Fokusebene (bzw. an der Werkstückoberfläche) einen Abstand von zumindest 20µm voneinander aufweisen. Vorzugsweise liegt diese Trennungsdistanz der Fokusquerschnitte (je nach Auslegung der optischen Achse des Strahlversatzelements) zwischen 50 µm bis 500 µm. Dadurch können optimale Bearbeitungsergebnisse erzielt werden.

Vorteilhafte Weiterbildungen sind in den Figuren und in den abhängigen Patentansprüchen dargelegt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: der Absorptionsgrad als Funktion des Einfallswinkels für verschiedene Strahlungsarten,
- Fig. 2: eine Ausführungsform der Erfindung mit dem Strahlversatzelement in einem konvergierenden Strahlengang-Abschnitt,
- Fig. 3: Prinzip des asymmetrischen Strahlversatzes eines polarisierenden Strahlversatzelements auf einen Strahl,
- Fig. 4: Fokusquerschnitte der Teilstrahlen in der Fokusebene ohne Drehung des Strahlversatzelements für den symmetrischen und asymmetrischen Strahlversatz,
- Fig. 5: Fokusquerschnitte der Teilstrahlen in der Fokusebene gemittelt über eine Periode der Oszillationsbewegung des Strahlversatzelements für den asymmetrischen Strahlversatz,
- Fig. 6: Fokusquerschnitte der Teilstrahlen in der Fokusebene gemittelt über eine vollständige Umdrehung des Strahlversatzelements für den asymmetrischen Strahlversatz,
- Fig. 7: Prinzip des symmetrischen Strahlversatzes eines geneigten polarisierenden Strahlversatzelements auf einen Strahl,
- Fig. 8: Fokusquerschnitte der Teilstrahlen in der Fokusebene gemittelt über eine Periode der Oszillationsbewegung des Strahlversatzelements für den symmetrischen Strahlversatz,
- Fig. 9: Fokusquerschnitte der Teilstrahlen in der Fokusebene gemittelt über eine vollständige Umdrehung des Strahlversatzelements für den symmetrischen Strahlversatz,
- Fig. 10: das Prinzip des Nachführens des Strahlversatzelements in Schneidrichtung bei einer Änderung der Vorschubrichtung,
- Fig. 11: eine Ausführungsform der Erfindung mit dem Strahlversatzelement in einem divergierenden Strahlengang-Abschnitt,
- Fig. 12: Mögliche Positionen eines Strahlversatzelements in einer komplexen optischen Laserbearbeitungsvorrichtung,
- Fig. 13: Auswirkung einer 2-fachen Vergrösserung auf den Querschnitt der Teilstrahlen in der Fokusebene (ohne Drehung) im Falle der Positionierung des polarisierendes Strahlversatzelements in einem konvergenten Strahlengang-Abschnitt,
- Fig. 14: Auswirkung einer 2-fachen Vergrösserung auf den Querschnitt der Teilstrahlen in der Fokusebene (ohne Drehung) im Falle der Positionierung des polarisierendes Strahlversatzelements in einem divergenten Strahlengang-Abschnitt,
- Fig. 15: den Strahlversatz der beiden Teilstrahlen im Fokusbereich.

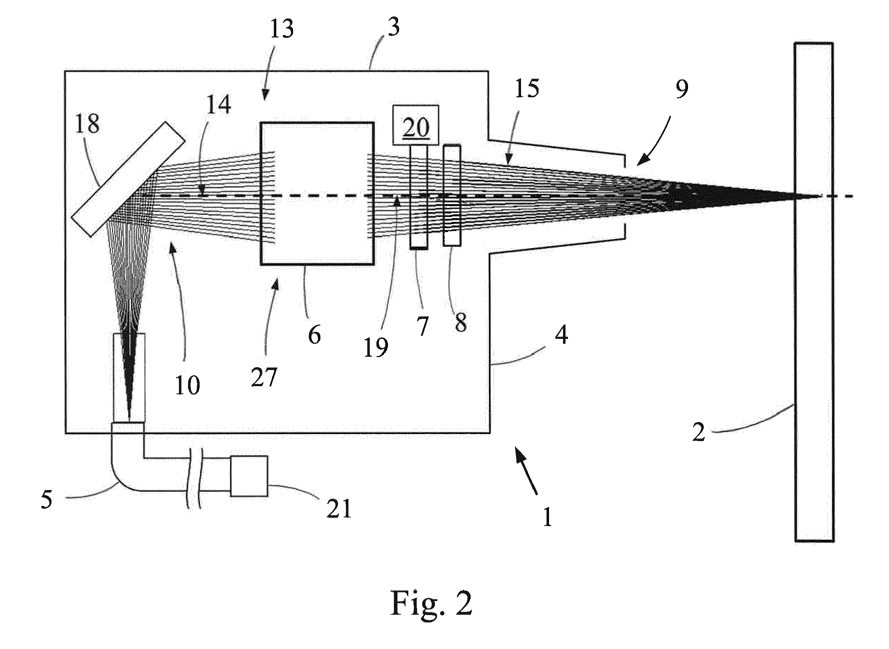

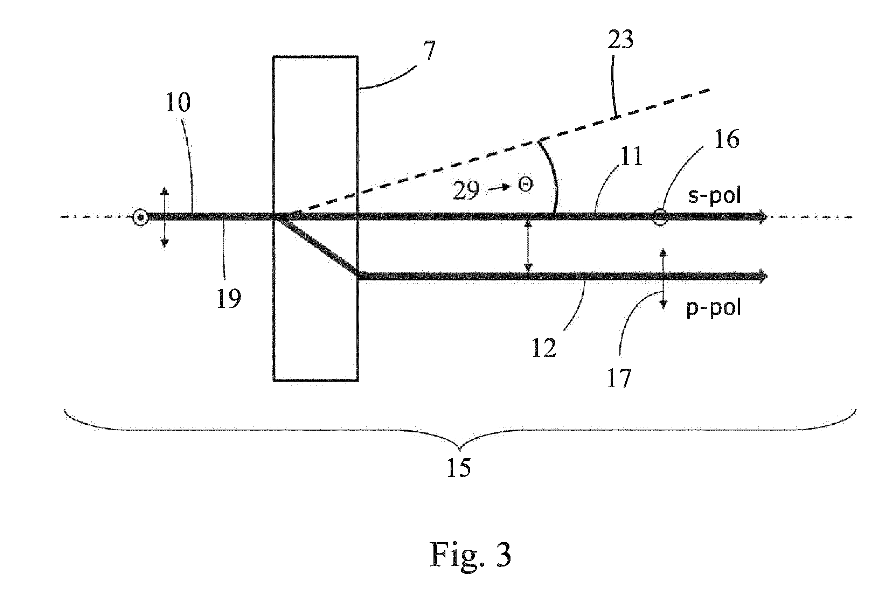

Fig. 2 zeigt eine Laserbearbeitungsvorrichtung 1 zur Bearbeitung eines insbesondere plattenförmig oder als Blech ausgebildeten Werkstückes 3, insbesondere in Form eines ein Laserbearbeitungskopfes 3, umfassend einen Strahlengang 13 und ein im Strahlengang 13 angeordnetes polarisierendes Strahlversatzelement 7 (Strahlteilelement) zur Erzeugung zweier linear polarisierter Teilstrahlen 11, 12 (Fig. 3), deren Polarisationsrichtungen zueinander, vorzugsweise um 90°, geneigt sind, aus einem Laserstrahl 10.

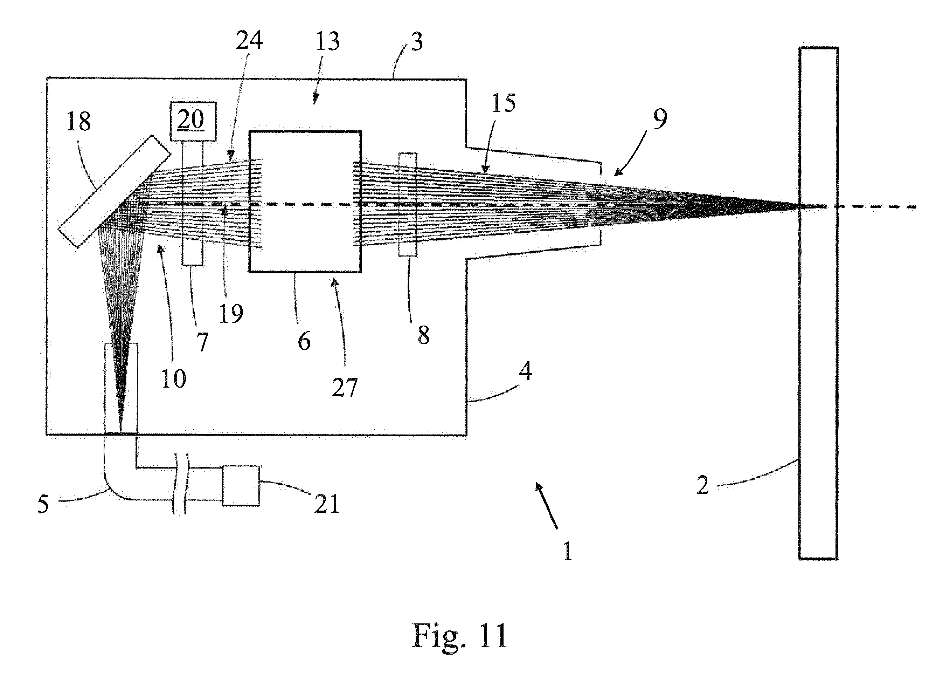

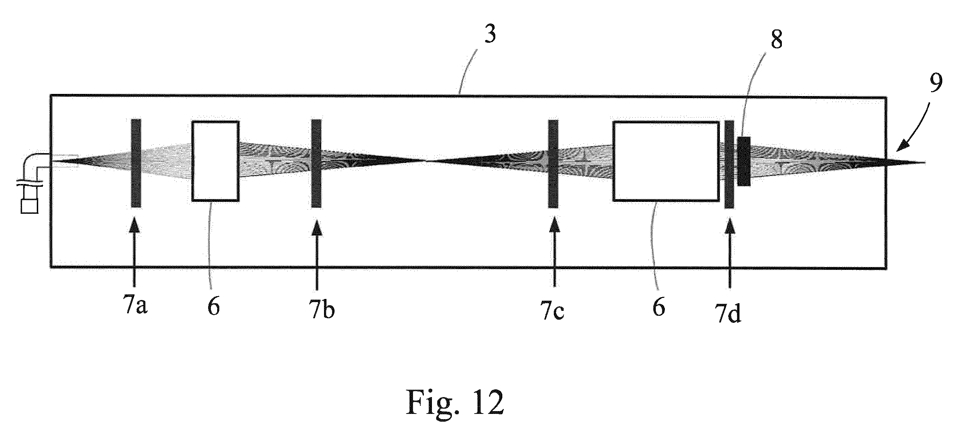

Das polarisierende Strahlversatzelement 7 ist dabei in einem konvergenten Strahlengang-Abschnitt 15 des Strahlenganges 13 angeordnet. Alternativ könnte das Strahlteileelement 7 auch in einem divergenten Strahlengang-Abschnitt angeordnet sein (Fig. 11 und 12).

Mit dem Bezugszeichen 23 ist die optische Achse des in diesem Fall doppelbrechenden Strahlversatzelements 7 bezeichnet. Der Strahlversatz, also die Distanz zwischen den beiden Teilstrahlen 11, 12, beträgt unmittelbar hinter dem Strahlversatzelement 7 vorzugsweise zumindest 50µm, vorzugsweise etwa 100µm. Der ordentliche Teilstrahl 11 passiert dabei das Strahlversatzelement 7 im Wesentlichen unversetzt, während der ausserordentliche Teilstrahl 12 lateral versetzt wird (asymmetrischer Strahlversatz).

Die Laserbearbeitungsvorrichtung 1 weist eine fokussierende Optik 6 in Form einer Sammellinse auf, die den Laserstrahl 10 fokussiert. Der konvergente Strahlengang-Abschnitt 15 verläuft von der fokussierenden Optik 6 durchgehend bis zu einer Laseraustrittsöffnung 9 (bzw. Laseraustrittsende) der Laserbearbeitungsvorrichtung 1.

Die Laserbearbeitungsvorrichtung 1 weist ein Gehäuse 4, in dem eine Laseraustrittsöffnung 9 der Laserbearbeitungsvorrichtung 1 ausgebildet ist, und ein im Strahlengang 13 angeordnetes Schutzglas 8, welches das Gehäuse 4 nach aussen hin abschliesst, auf. Das polarisierende Strahlversatzelement 7 ist im konvergenten Strahlengang-Abschnitt 15 zwischen der fokussierenden Optik 6 und dem Schutzglas 8 angeordnet. Dieser Abschnitt ist in der bevorzugten Ausführung von Fig. 2 frei von weiteren optischen Elementen.

Das polarisierende Strahlversatzelement 7 ist um eine Drehachse 19 drehbar gelagert und wirkt mit einem Drehantrieb 20 zusammen.

Die Drehachse 19 ist im Wesentlichen parallel zur optischen Achse 14 des Strahlenganges 13 und fällt in der dargestellten Ausführungsform mit der optischen Achse 14 des Strahlenganges 13 zusammen.

Die Steuerung des Drehantriebes 20 ist ausgebildet, um eine kontinuierliche Drehung und/oder eine intermittierende Vorwärts- und Rückwärts-Drehbewegung (Oszillation) des polarisierenden Strahlversatzelements 7 um die Drehachse 19 zu bewirken.

Die fokussierende Optik 6 kann Teil einer verstellbaren Fokussiereinrichtung 27 zum Einstellen des sich durch den konvergenten Strahlengang-Abschnitt 15 ergebenden Fokus ist.

Im Folgenden wird ein Bearbeitungsverfahren, nämlich ein Schneidvorgang entlang einer Vorschubrichtung (bzw. Schnitttrajektorie) näher beschrieben. Wie bereits oben erwähnt wird ein Laserstrahl 10 entlang eines Strahlenganges 13 in Richtung eines Werkstückes 2 geführt. Mittels eines im Strahlengang 13 angeordneten polarisierenden Strahlversatzelements 7 werden aus dem Laserstrahl 10 zwei linear polarisierte Teilstrahlen 11, 12, deren Polarisationsebenen zueinander (vorzugsweise um 90°) geneigt sind, erzeugt. Die Erzeugung der zwei linear polarisierten Teilstrahlen 11, 12 erfolgt in einem divergenten (Fig. 11) oder konvergenten (Fig. 2) Strahlengang-Abschnitt 15 des Strahlenganges 13 der Laserbearbeitungsvorrichtung 1.

Das Bearbeiten des Werkstückes 2 erfolgt entlang einer Vorschubrichtung 22 wobei vorzugsweise die Teilstrahlen 11, 12 (bzw. deren Fokusquerschnitte) in der Fokusebene in Bezug zur Vorschubrichtung 22 hintereinander angeordnet sind.

Während des Bearbeitungsvorganges führt das polarisierende Strahlversatzelement 7 - gegebenenfalls im Laserbearbeitungskopf 3 - relativ zum Werkstück 2 eine Drehbewegung um eine Drehachse 19 aus, die im Wesentlichen parallel zur optischen Achse 14 des Strahlenganges 13 ist, vorzugsweise mit der optischen Achse 14 des Strahlenganges 13 zusammenfällt.

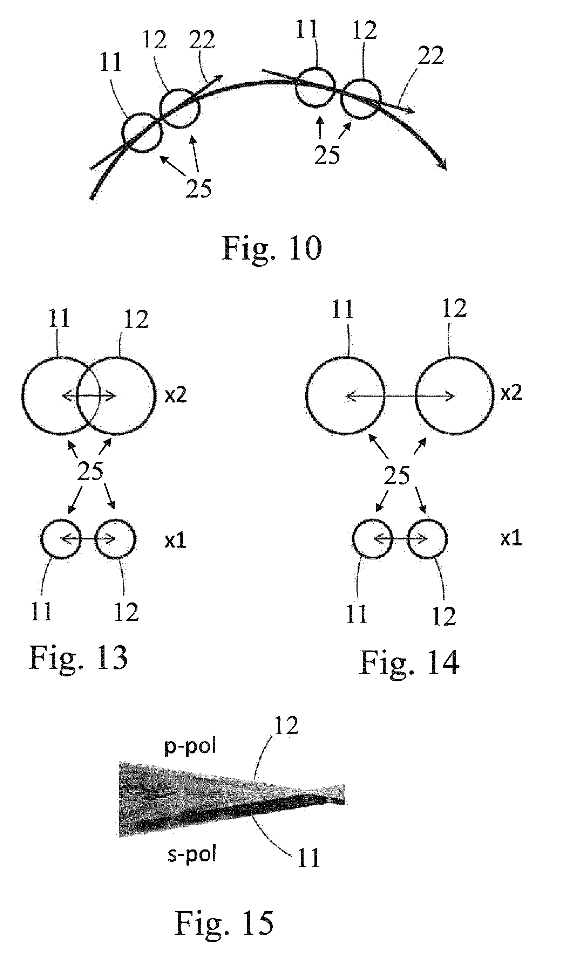

Das polarisierende Strahlversatzelement 7 kann dadurch relativ zum Werkstück 2 in Abhängigkeit von der Änderung der Vorschubrichtung 22 gedreht werden, sodass die Lage der beiden Teilstrahlen 11, 12 in der Fokusebene (bzw. auf der Werkstückoberfläche) relativ zur jeweiligen Vorschubrichtung 22 im Wesentlichen unverändert bleibt (Fig. 10).

Mit anderen Worten ist in dieser bevorzugten Umsetzungsvariante das polarisierende Strahlversatzelement 7 (bzw. Strahlversatzelement) drehbar ausgeführt, um die - in Bezug zur Vorschubrichtung 22 - vor- und nachlaufende Polarisationsform tangential zur im Allgemeinen gekrümmten Schnitttrajektorie nachführen zu können (Fig. 10). Dabei ist für die hier vorgeschlagene Umsetzungsvariante die bevorzugte vorlaufende Polarisationsform die lineare Polarisation desjenigen Teilstrahls 12, der an der Schnittfrontfläche die p-polarisierte Absorption realisiert.

In einer weiteren bevorzugten Umsetzungsvariante wird das drehbare Strahlversatzelement 7 (bzw. Strahlteilelement) so betrieben, dass vor- und nachlaufende Polarisationsform in einem festen Winkel zur Tangentialrichtung der im Allgemeinen gekrümmten Schnitttrajektorie nachgeführt wird.

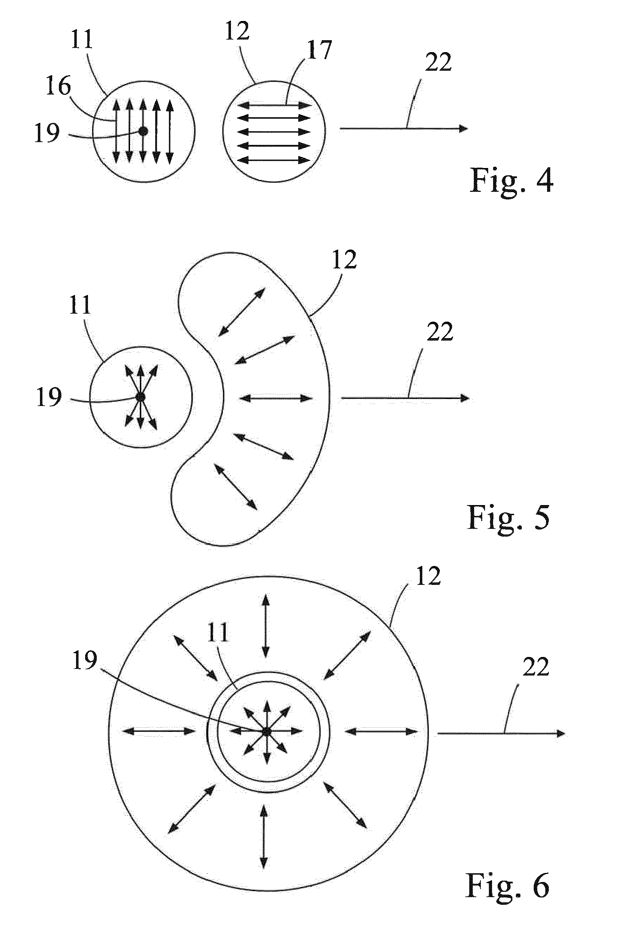

Die Normalprojektion der Polarisationsrichtung oder der zeitlich gemittelten Polarisationsrichtung des - in Vorschubrichtung 22 gesehen - vorderen Teilstrahles 12 auf die Werkstückoberfläche steht im Wesentlichen parallel zur Vorschubrichtung 22. (Fig. 4 und 5)

Die Normalprojektion der Polarisationsrichtung oder der zeitlich gemittelten Polarisationsrichtung des - in Vorschubrichtung 22 gesehen - hinteren Teilstrahles 11 auf die Werkstückoberfläche steht im Wesentlichen senkrecht zur Vorschubrichtung 22.

Wie in Fig. 4 zu sehen bilden sich im Fokusbereich demzufolge zwei Fokusse mit denselben Intensitäten aus, die vorwiegend zueinander senkrecht linear polarisiert sind (wobei ein geringes Ausmass an unpolarisierten Anteilen nicht auszuschliessen ist). In diesem einfachsten Fall wirkt der p-polarisierte Teilstrahl 12 in Vorschubrichtung 22 senkrecht auf die Schneidfront und der s-polarisierte Teilstrahl 11 senkrecht auf die Fugenseiten.

Damit ergeben sich auf der Schneidfront und den Fugenseiten höhere Absorptionen, so dass insgesamt eine höhere Schneideffizienz resultiert. Bei einer Richtungsänderung des Vorschubs muss hierbei die Intensitätsverteilung vorlaufend nachgestellt werden. Entsprechende Drehung der Intensitätsverteilung erfolgt dabei über eine Drehung des (doppelbrechenden) Strahlversatzelements um die Drehachse 19 (bzw. seine Mittelachse). Daraus resultiert eine entsprechende Drehung der Intensitätsverteilung um die Achse des ordentlichen (o) Teilstrahls. Der daraus resultierende effektive Fokusquerschnitt 26 ist in den betreffenden Figuren als solcher bezeichnet.

Zusätzlich zu der Drehung mit der Vorschubrichtung 22 kann das Strahlversatzelement 7 auch oszillierend eingesetzt werden, so dass sich im zeitlichen Mittel eine teilkreisförmige (bzw. nierenförmige) Intensitätsverteilung aus dem ao-Teilstrahl 12 ausprägt (effektiver Fokusquerschnitt 26; Fig. 5). Sobald die oszillierende Teil-Drehung schneller als die Reaktionszeit des umgebenden Materials ist, wirkt die oszillierende p-Polarisation im zeitlichen Mittel als radiale Polarisation auf die Schneidfront. Diese neue Strahlform ergibt damit einen örtlich begrenzten radialen Polarisationszustand mit höherer Absorption auf der Schneidfront. Die oszillierende Teil-Drehung hat dabei dieselbe Wirkung auf den o-Strahl, der ebenso im zeitlichen Mittel teilweise radial polarisiert wird, wobei hier die Polarisation senkrecht auf die Fugenseiten wirkt. Daraus sind Verbesserungen der Qualitäten auf den Fugenseiten möglich.

Dabei kann - wie in Fig. 5 zu sehen - das polarisierende Strahlversatzelement 7 um die Drehachse 19 eine Oszillationsbewegung ausführen, wobei vorzugsweise der Drehwinkel der Oszillation innerhalb einer Periode höchstens 120°, vorzugsweise höchstens 90° beträgt, wobei vorzugsweise die Oszillationsbewegung im Wesentlichen symmetrisch zur Vorschubrichtung (22) ist. Bei einer symmetrischen Oszillation entsprechen diese Werte einer maximalen Auslenkung aus der Ruhelage (vorzugweise aus der Vorschubrichtung) um ±60° bzw. um ±45°. In Fig. 5 beträgt die maximale Abweichung der Polarisationsrichtung (eigentlich: der Normalprojektion der Polarisationsrichtung auf die Werkstückoberfläche) etwa 45° von der 'Ruhestellung' bzw. von der aktuellen Vorschubrichtung 22 in beiden Drehrichtungen.

Hier wird das drehbare Strahlversatzelement also derart betrieben, dass die vorlaufende Polarisationsform (des Teilstrahls 12) mit einem Auslenkungswinkel um die Tangentialrichtung oder um einen festen Winkel zur Tangentialrichtung der Schnitttrajektorie oszilliert, wobei die Drehachse 19 im nachlaufenden Teilstrahl 11 liegt (Fig. 5).

In einer weiteren bevorzugten Umsetzungsvariante (Fig. 6) wird das drehbare Strahlversatzelement derart betrieben, dass der ausserordentliche (ao) Teilstrahl 12 mit einer beliebigen Drehzahl um den ordentlichen (o) Teilstrahl 11 rotiert. Teilstrahl 12 erzeugt damit einen ringförmigen effektiven Fokusquerschnitt 26 auf dem Werkstück 2.

Die Drehung des Strahlversatzelements kann auch permanent bzw. kontinuierlich vonstattengehen, so dass sich aus dem (ao) Teilstrahl 12 im zeitlichen Mittel eine ringförmige, radialpolarisierte Intensitätsverteilung um den (o) Teilstrahl 11 ausbildet (Fig. 6). Für den Teilstrahl 11 selbst ergibt sich dabei im zeitlichen Mittel eine Mischpolarisation, die weiterhin zu jeden Zeitpunkt linear polarisiert ist. Durch schnelle Rotation (im kHz-Bereich) des (doppelbrechenden) Strahlversatzelements nimmt der (ao) Teilstrahl 12 hierbei eine ringförmige Fläche ein, deren mittlere Intensität in Bezug zu der Intensität des (o) Teilstrahls 11 weitgehend herabgesenkt ist. Diese Intensitätsverteilung ist radialsymmetrisch und muss nicht in Schneidrichtung nachgeführt werden.

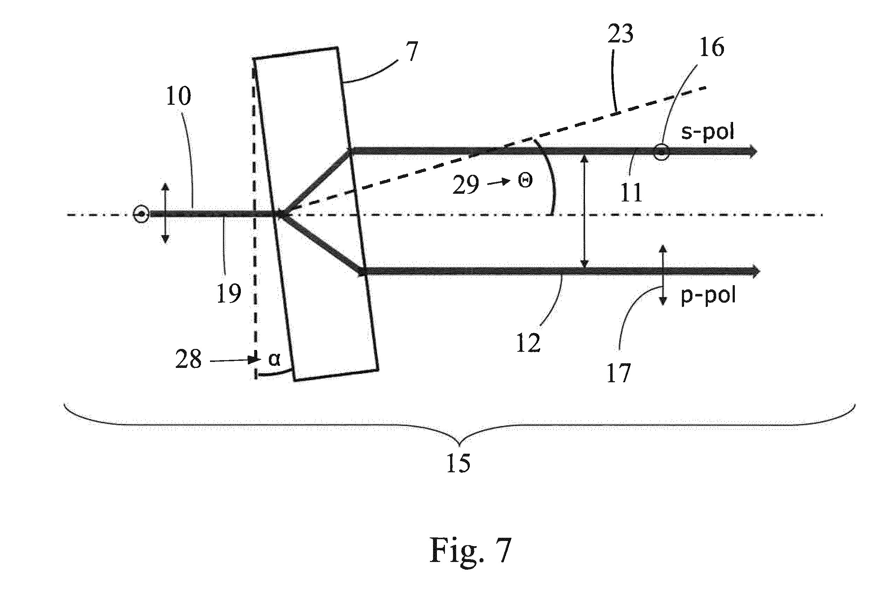

In der Ausführungsform der Fig. 7 ist das polarisierende Strahlversatzelement 7 zur Ebene, die senkrecht zur optischen Achse 14 des vor dem polarisierenden Strahlversatzelement 7 verlaufenden Strahlengang-Abschnitts steht, geneigt, sodass der laterale Versatz der zwei linear polarisierten Teilstrahlen 11, 12 in Bezug zur optischen Achse 14 im Wesentlichen gleich gross ist. Dadurch können die beiden Teilstrahlen durch Neigen des Strahlversatzelements zur Achse des einfallenden Strahls lateral versetzt werden. Damit verschiebt sich bei Rotation des Strahlversatzelements das Drehzentrum, um welches die beiden fokussierten Teilstrahlen rotieren.

Das (doppelbrechende) Strahlversatzelement wird unter einem Verkippungswinkel α in Bezug zu der Ausbreitungsrichtung eingesetzt, wodurch die beiden Teilstrahlen 11, 12 symmetrisch aufspalten. Wie Fig. 7 schematisch dargestellt, erzeugt eine definierte Verkippung bei einer gegebenen optischen Kristallachse, einen Parallelversatz des o- und ao-Teilstrahls mit denselben Abständen zu der Mittenachse des optischen Systems.

In dieser bevorzugten Umsetzungsvariante wird das drehbare Strahlversatzelement mit einem Neigungswinkel zur Achse des einfallenden Strahls geneigt (Fig. 7) und damit die Drehachse 19 relativ lateral verschoben, um den die beiden fokussierten Teilstrahlen 11, 12 entweder um den Vollwinkel rotiert oder um einen Teilwinkel oszilliert werden. Besonders bevorzugt erfolgt die Positionierung der Drehachse 19 genau in der Mitte zwischen den beiden Teilstrahlen 11, 12.

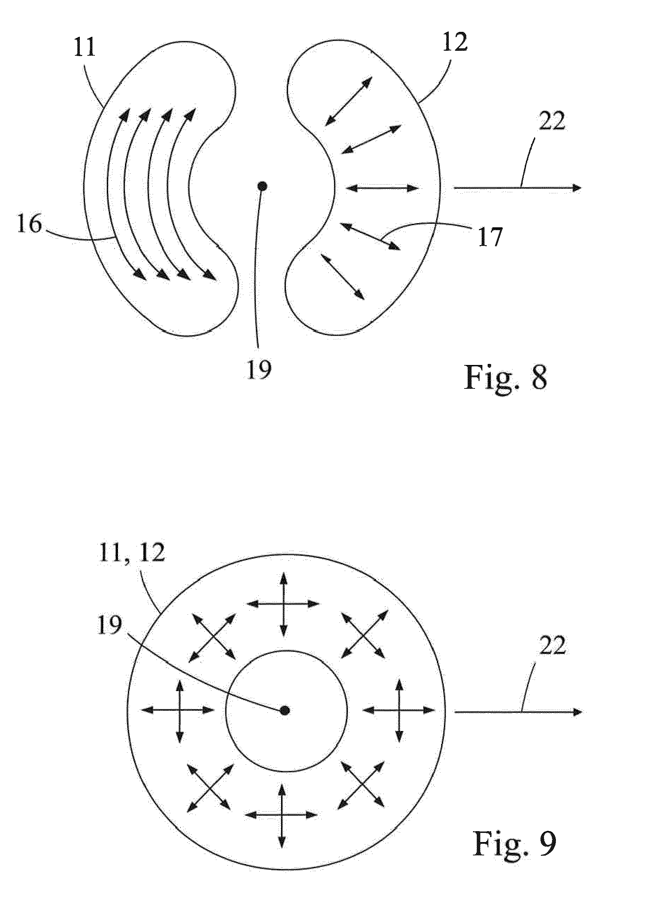

Dadurch ergeben sich die Intensitätsverteilungen bzw. der effektive Fokusquerschnitt 26 wie in Fig. 8 (Oszillation) und Fig. 9 (permanente Umdrehungen) gezeigt.

Eine permanente Drehung des optischen Strahlversatzelements 7 erzeugt für einen symmetrischen Versatz eine rein ringförmige Intensitätsverteilung (Fig. 8), die im zeitlichen Mittel eine Mischpolarisation aufweist. Im Vergleich zu der Intensitätsverteilung aus Fig. 6 resultiert die doppelte Intensität, da der Ring hierbei aus beiden Teilstrahlen geformt wird.

Bei der vollen Rotation lässt sich eine Drehzahl einstellen, die grösser ist als die Reaktionszeit des Bearbeitungsprozesses. Bei Schmelzschnitten von ferrischen Metallen von einigen mm Dicke reichen typischerweise Drehzahlen > 0.1 kHz. Dadurch "sieht" der Bearbeitungsprozess nur das zeitliche Mittel der in diesem Fall ringförmigen Intensitätsverteilung (Fig. 6 und 9).

Setzt man den symmetrischen Versatz (Fig. 7) zusammen mit der oszillierenden Teil-Drehung ein, so ergeben sich folglich zwei Teilkreise um die mittlere Drehachse (Fig. 9). In Anlehnung an die Intensitätsverteilung aus Fig. 5 wird ebenso im zeitlichen Mittel eine radiale Polarisation in Vorschubrichtung 22 erzeugt. Der (o) Teilstrahl 11 bildet hierbei jedoch eine breitere Intensitätsverteilung, die noch effektiver auf die Fugenseiten einwirkt, so dass die Bearbeitungsqualität gesteigert werden kann.

Bevorzugt weisen die Teilstrahlen 11, 12 in der Fokusebene einen Abstand von zumindest 20µm, vorzugsweise um zumindest 50µm (z.B. etwa 100µm) voneinander auf.

Eine variable Vergrösserung (mittels Verstellung der fokussierenden Optik 6) des Laserbearbeitungskopfes (insbesondere Schneidkopfs) bewirkt bei allen hier vorgestellten Varianten zusätzliche Modifikationen der Intensitätsverteilungen der beiden Teilstrahlen 11, 12. Bei einer Verstellung der Vergrösserung ändert sich der Radius (bzw. der Durchmesser) der beiden Fokusse, wobei ihr Abstand stets konstant bleibt. Damit können ohne Änderungen der Polarisationsformung auch verschiedene Spotdurchmesser realisiert werden.

Fig. 11 zeigt schliesslich eine Variante, bei der das polarisierende Strahlversatzelement 7 in einem divergenten Strahlengang 24 angeordnet ist.

Fig. 12 zeigt eine Laserbearbeitungsvorrichtung 1, die einen komplexeren Strahlengang aus divergenten und konvergenten Strahlengang-Abschnitten 15 und 24 aufweist. Die Bezugszeichen 7a, 7b, 7c und 7d zeigen mögliche Anordnungen eines polarisierenden Strahlversatzelementes 7. Dieses kann in einem konvergenten Strahlengang-Abschnitt 15 oder in einem divergenten Strahlengang-Abschnitt 24 angeordnet sein.

An dieser Stelle sei erwähnt, dass die Umlenkeinrichtung 18 aus den Fig. 2 und 11 nicht erfindungswesentlich ist, sondern der Laserstrahl derart in die Laserbearbeitungsvorrichtung 1 eingespeist werden kann, sodass er unabgelenkt (d.h. ohne Umlenkeinrichtung) direkt auf die fokussierende Optik treffen kann, so wie beispielsweise in Fig. 12 angedeutet.

Fig. 13 zeigt die Auswirkung einer 2-fachen Vergrösserung (x2) auf den Fokusquerschnitt 25 der Teilstrahlen 11, 12 in der Fokusebene (ohne Drehung) im Falle der Positionierung des polarisierenden Strahlversatzelements 7 in einem konvergenten Strahlengang-Abschnitt 15 (Fig. 2). Dies wird durch eine optische Abbildungseinrichtung bzw. Fokussiereinrichtung 27 erreicht, die durch die fokussierende Optik 6 gebildet wird oder diese enthält. Während die Fokusquerschnitte 25 zunehmen, bleibt die Distanz zwischen den Mittelpunkten im Wesentlichen konstant, sodass es bei einer Vergrösserung der Fokusquerschnitte zu einer teilweisen Überlagerung kommen kann.

Fig. 14 zeigt die Auswirkung einer 2-fachen Vergrösserung (x2) auf den Fokusquerschnitt 25 der Teilstrahlen 11, 12 in der Fokusebene (ohne Drehung) im Falle der Positionierung des polarisierenden Strahlversatzelements 7 in einem divergenten Strahlengang-Abschnitt 24 (Fig. 11). Dabei vergrössert sich neben dem Fokusquerschnitt 25 selbst auch der Abstand zwischen den Mittelpunkten der Fokusquerschnitte 25.

Fig. 15 zeigt in einem Schnitt parallel zur Strahlausbreitungsrichtung den ersten und zweiten Teilstrahl im Fokusbereich.

Die Erfindung ist nicht auf die beschriebenen Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

### Bezugszeichenliste

- 1: Laserbearbeitungsvorrichtung
- 2: Werkstück
- 3: Laserbearbeitungskopf
- 4: Gehäuse
- 5: Transportfaser
- 6: Fokussierende Optik
- 7: Polarisierendes Strahlversatzelement
- 8: Schutzglas
- 9: Laseraustrittsöffnung
- 10: Laserstrahl
- 11: Erster Teilstrahl
- 12: Zweiter Teilstrahl
- 13: Strahlengang
- 14: (ideale) optische Achse des Strahlengangs
- 15: Konvergenter Strahlengang-Abschnitt
- 16: Polarisationsrichtung(en) des ersten Teilstrahls
- 17: Polarisationsrichtung(en) des zweiten Teilstrahls
- 18: Umlenkeinrichtung
- 19: Drehachse
- 20: Drehantrieb
- 21: Laserquelle
- 22: Vorschubrichtung
- 23: Optische Achse des doppelbrechenden Strahlteilelements
- 24: Divergenter Strahlengang-Abschnitt
- 25: Fokusquerschnitt
- 26: Effektiver Fokusquerschnitt
- 27: Fokussiereinrichtung
- 28: Neigungswinkel des polarisierenden Strahlversatzelements
- 29: Neigungswinkel zwischen der optischen Achse des polarisierenden Strahlversatzelements und der optischen Achse des Strahlenganges

## Patentansprüche

1. Laserbearbeitungsvorrichtung (1) zur Bearbeitung von Werkstücken (2), insbesondere ein Laserbearbeitungskopf (3), umfassend einen Strahlengang (13) und ein im Strahlengang (13) angeordnetes polarisierendes Strahlversatzelement (7) zur Erzeugung zweier linear polarisierter Teilstrahlen (11, 12), deren Polarisationsrichtungen zueinander, vorzugsweise um 90°, geneigt sind, aus einem Laserstrahl (10), **dadurch gekennzeichnet, dass** das polarisierende Strahlversatzelement (7) in einem divergenten Strahlengang-Abschnitt (24) oder in einem konvergenten Strahlengang-Abschnitt (15) des Strahlenganges (13) angeordnet ist.

2. Laserbearbeitungsvorrichtung nach Anspruch 1, **dadurch gekennzeichnet, dass** die Laserbearbeitungsvorrichtung (1) eine fokussierende Optik (6), vorzugsweise eine Sammellinse aufweist, die den Laserstrahl (10) fokussiert, wobei vorzugsweise der konvergente Strahlengang-Abschnitt (15) von der fokussierenden Optik (6) durchgehend bis zu einer Laseraustrittsöffnung (9) oder einem Laseraustrittsende der Laserbearbeitungsvorrichtung (1) verläuft.

3. Laserbearbeitungsvorrichtung nach Anspruch 1 oder 2, **dadurch gekennzeichnet, dass** die Laserbearbeitungsvorrichtung (1) ein Gehäuse (4), in dem eine Laseraustrittsöffnung (9) der Laserbearbeitungsvorrichtung (1) ausgebildet ist, und ein im Strahlengang (13) angeordnetes Schutzglas (8), welches das Gehäuse (4) nach aussen hin abschliesst, aufweist, wobei das polarisierende Strahlversatzelement (7) im konvergenten Strahlengang-Abschnitt (15) zwischen der fokussierenden Optik (6) und dem Schutzglas (8) angeordnet ist.

4. Laserbearbeitungsvorrichtung nach einem der vorhergehenden Ansprüche, **dadurch gekennzeichnet, dass** das polarisierende Strahlversatzelement (7) um eine Drehachse (19) drehbar gelagert ist und mit einem Drehantrieb (20) zusammenwirkt.

5. Laserbearbeitungsvorrichtung nach Anspruch 4, **dadurch gekennzeichnet, dass** die Drehachse (19) im Wesentlichen parallel zur optischen Achse (14) des Strahlenganges (13) ist, vorzugsweise mit der optischen Achse (14) des Strahlenganges (13) zusammenfällt.

6. Laserbearbeitungsvorrichtung nach Anspruch 4 oder 5, **dadurch gekennzeichnet, dass** die Steuerung des Drehantriebes (20) ausgebildet ist, um eine kontinuierliche Drehung und/oder intermittierende Vorwärts- und Rückwärts-Drehbewegung des polarisierenden Strahlversatzelements (7) um die Drehachse (19) zu bewirken.

7. Laserbearbeitungsvorrichtung nach einem der vorhergehenden Ansprüche, **dadurch gekennzeichnet, dass** das polarisierende Strahlversatzelement (7) zur Ebene, die senkrecht zur optischen Achse (14) des vor dem polarisierenden Strahlversatzelement (7) verlaufenden Strahlengang-Abschnitts steht, geneigt ist, sodass der laterale Versatz der zwei linear polarisierten Teilstrahlen (11, 12) in Bezug zur optischen Achse (14) im Wesentlichen gleich gross ist.

8. Laserbearbeitungsvorrichtung nach einem der vorhergehenden Ansprüche, **dadurch gekennzeichnet, dass** die fokussierende Optik (6) Teil einer verstellbaren Fokussiereinrichtung (27) zum Einstellen des sich durch den konvergenten Strahlengang-Abschnitt (15) ergebenden Fokus ist.

9. Verfahren zum Bearbeiten, insbesondere zum Schneiden, von Werkstücken (2) mit einer Laserbearbeitungsvorrichtung (1), insbesondere nach einem der vorhergehenden Ansprüche, bei dem ein Laserstrahl (10) entlang eines Strahlenganges (13) in Richtung eines Werkstückes (2) geführt wird, wobei mittels eines im Strahlengang (13) angeordneten polarisierenden Strahlversatzelements (7) aus dem Laserstrahl (10) zwei linear polarisierte Teilstrahlen (11, 12), deren Polarisationsebenen zueinander, vorzugsweise um 90°, geneigt sind, erzeugt werden, **dadurch gekennzeichnet, dass** die Erzeugung der zwei linear polarisierten Teilstrahlen (11, 12) in einem divergenten oder konvergenten Strahlengang-Abschnitt (15) des Strahlenganges (13) der Laserbearbeitungsvorrichtung (1) erfolgt.

10. Verfahren nach Anspruch 9, **dadurch gekennzeichnet, dass** das Bearbeiten des Werkstückes (2) entlang einer Vorschubrichtung (22) erfolgt und die Teilstrahlen (11, 12) in der Fokusebene in Bezug zur Vorschubrichtung (22) hintereinander angeordnet sind.

11. Verfahren nach Anspruch 10, **dadurch gekennzeichnet, dass** die Normalprojektion der Polarisationsrichtung oder der zeitlich gemittelten Polarisationsrichtung des - in Vorschubrichtung (22) gesehen - vorderen Teilstrahles (12) auf die Werkstückoberfläche im Wesentlichen parallel zur Vorschubrichtung (22) steht, **und/oder dass** die Normalprojektion der Polarisationsrichtung oder der zeitlich gemittelten Polarisationsrichtung des - in Vorschubrichtung (22) gesehen - hinteren Teilstrahles (11) auf die Werkstückoberfläche im Wesentlichen senkrecht zur Vorschubrichtung (22) steht.

12. Verfahren nach einem der Ansprüche 9 bis 11, **dadurch gekennzeichnet, dass** während des Bearbeitungsvorganges das polarisierende Strahlversatzelement (7) relativ zum Werkstück (2) eine Drehbewegung um eine Drehachse (19) ausführt, die im Wesentlichen parallel zur optischen Achse (14) des Strahlenganges (13) ist, vorzugsweise mit der optischen Achse (14) des Strahlenganges (13) zusammenfällt.

13. Verfahren nach Anspruch 9, **dadurch gekennzeichnet, dass** das polarisierende Strahlversatzelement (7) relativ zum Werkstück (2) in Abhängigkeit von der Änderung der Vorschubrichtung (22) gedreht wird, sodass die Lage der beiden Teilstrahlen (11, 12) in der Fokusebene relativ zur jeweiligen Vorschubrichtung (22) im Wesentlichen unverändert bleibt.

14. Verfahren nach Anspruch 12 oder 13, **dadurch gekennzeichnet, dass** das polarisierende Strahlversatzelement (7) um die Drehachse (19) eine Oszillationsbewegung ausführt, wobei vorzugsweise der Drehwinkel der Oszillation innerhalb einer Periode höchstens 100°, vorzugsweise höchstens 90° beträgt, wobei vorzugsweise die Oszillationsbewegung im Wesentlichen symmetrisch zur Vorschubrichtung (22) ist.

15. Verfahren nach einem der Ansprüche 9 bis 14, **dadurch gekennzeichnet, dass** die Teilstrahlen (11, 12) in der Fokusebene um zumindest 20µm, vorzugsweise um zumindest 50µm zueinander versetzt sind.
